(19) Europäisches Patentamt / European Patent Office / Office européen des brevets

(11) **EP 4 404 014 B1**

(12) **EUROPÄISCHE PATENTSCHRIFT**

(45) Veröffentlichungstag und Bekanntmachung des Hinweises auf die Patenterteilung:
**15.01.2025 Patentblatt 2025/03**

(21) Anmeldenummer: **23152059.4**

(22) Anmeldetag: **17.01.2023**

(51) Internationale Patentklassifikation (IPC):
**G05B 23/02** *(2006.01)*

(52) Gemeinsame Patentklassifikation (CPC):
**G05B 23/024; G05B 23/0281;** G05B 2219/37435

(54) **SCHWINGUNGSÜBERWACHUNG ZUR FEHLERERKENNUNG BEI DER PROZESSAUTOMATISIERUNG**

VIBRATION MONITORING FOR FAULT DETECTION IN PROCESS AUTOMATION

SURVEILLANCE DE VIBRATIONS POUR LA DÉTECTION DE DÉFAUTS DANS L'AUTOMATISATION DE PROCESSUS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**24.07.2024 Patentblatt 2024/30**

(73) Patentinhaber: **ifm electronic gmbh**
**45128 Essen (DE)**

(72) Erfinder:
• **AJOUZ, Ali**
  **57223 Kreuztal (DE)**
• **KLEMM, Matthias**
  **57584 Scheuerfeld (DE)**
• **BOGUNIA, Lukas**
  **58840 Plettenberg (DE)**
• **FRIEDRICH, Christian**
  **57072 Siegen (DE)**
• **VARMA, Roger**
  **Newtown Square, PA 19073 (US)**
• **HOFFMANN, Alexander**
  **57074 Siegen (DE)**

(74) Vertreter: **Otten, Roth, Dobler & Partner mbB Patentanwälte**
**Großtobeler Straße 39**
**88276 Berg / Ravensburg (DE)**

(56) Entgegenhaltungen:
**EP-A1- 4 120 038    EP-B1- 0 907 913**

• **SHALALFEH LAITH ET AL: "Fractional Dynamics of PMU Data", IEEE TRANSACTIONS ON SMART GRID, IEEE, USA, vol. 12, no. 3, 15 December 2020 (2020-12-15), pages 2578 - 2588, XP011850407, ISSN: 1949-3053, [retrieved on 20210420], DOI: 10.1109/TSG.2020.3044903**

**Beschreibung**

Die Erfindung betrifft ein computerimplementiertes Überwachungsverfahren für die Schwingungsanalyse zur Fehlererkennung eines Maschinen- bzw. Hardwarefehlers bei der Prozessautomatisierung.

Aus dem Stand der Technik ist bekannt, maschinell ausgeführte Prozesse dahingehend zu überwachen, ob Fehler oder Ausfälle bei den verwendeten Maschinen, Rechnern, usw. auftreten. Zu diesem Zweck werden typischerweise Sensoren eingesetzt, welche kontinuierlich während des Prozessablaufs Daten aufnehmen, die nach einem festgelegten Kriterium ausgewertet werden, um zu entscheiden, ob ein Fehler vorliegt oder nicht. Aus der DE 10 2018 222 562 A1 ist so z.B. bekannt, einen Fehlerzustand in einem Erregerkreis einer elektrischen Maschine zu erkennen, wobei als sensorisch erfasste Vergleichssignale der Erregerstrom und das Ansteuersignal mit Referenzwerten gefiltert und verglichen werden. Aus der EP 0 934 567 A1 ist ein Verfahren zur Klassifikation der statistischen Abhängigkeit einer messbaren Zeitreihe bekannt, bei dem iterative Test mit verschiedenen Nullhypothesen beschrieben werden. Aus der DE 10 2019 107 363 A1 wiederum ist ein computerimplementiertes Verfahren zur Ausgabe eines Abnutzungssignals einer Werkzeugmaschine mit einer sogenannte "Change Point Detection" mit Abstandsmetrik bekannt. Dieses Verfahren ist jedoch in der Regel nicht zuverlässig genug für Langzeitbeobachtungen rund um die Uhr.

Ferner ist die Beurteilung der Datenqualität anhand von Nullhypothesen auch aus L. Shalalfeh et al., Fractional Dynamics of PMU Data (IEEE Transactions on Smart Grid, IEEE, USA, Bd. 12, Nr. 3, S. 1-11, Mai 2021), XP011850407, ISSN: 1949-3053, DOI: 10.1109/TSG.2020.3044903, bekannt.

Aus der EP 0 907 913 B1 ist ferner ein Verfahren zur Diagnosedifferenzierung bekannt, bei dem mit einem Histogramm Regelabweichungen gemessen werden, wobei auf verschiedene Störungsquellen geschlossen werden kann.

Aufgabe der Erfindung ist es, ein Überwachungsverfahren zur Fehlererkennung vorschlagen zu können, welches eine besonders zuverlässige Fehlererkennung ermöglicht.

Die Aufgabe wird, ausgehend von bisherigen, aus dem Stand der Technik bekannten Überwachungsverfahren, durch die Merkmale des Anspruchs 1 gelöst.

Durch die in den abhängigen Ansprüchen genannten Maßnahmen sind vorteilhafte Ausführungen und Weiterbildungen der Erfindung möglich.

Das erfindungsgemäße Überwachungsverfahren ist dazu bestimmt, in der Prozessautomatisierung für eine Schwingungsanalyse eingesetzt zu werden. Zum Beispiel kann eine Maschine mit einem Rotor, etwa einem Lüfter, auf mögliche Fehler wie sich langsam gemäß einem Trend entwickelnde fehlerhafte Abweichungen oder dergleichen hin untersucht werden, indem die Schwingung und deren Abweichungen detektiert werden. Dementsprechend umfasst das erfindungsgemäße Überwachungsverfahren zur Fehlererkennung eines Maschinenfehlers bzw. eines Hardwarefehlers, der sich aus einer Schwingungsanalyse ergibt, bei einem maschinell ausgeführten Prozess zunächst ebenfalls die Erfassung wenigstens einer Serie von während des Prozessablaufs gemessenen Sensordaten. Diese sensorisch erfassten Daten werden oftmals in zeitlicher Folge aufgenommen. Denkbar ist aber z.B. auch, dass die Serie an Sensordaten eine örtliche Abfolge oder einen örtlichen Verlauf darstellt, etwa wenn sensorisch erfasst werden soll, ob zwischen zwei Teilen stets der gleiche Abstand eingehalten wird oder ob ein Bauteil nicht aufgrund von Erwärmung, Unwuchten oder sonstigen Unregelmäßigkeiten seine vorgesehene Lagerungsposition verlässt.

Die Lehre der Erfindung zeichnet sich dadurch aus, dass die angestrebte Fehlererkennung auch eine Fehlervorhersage umfassen kann. Bei der Erfindung wurde erkannt, dass sich Maschinen- bzw. Hardwarefehler gerade bei der Überwachung von Schwingungen bzw. Rotationen oftmals "ankündigen", d.h. es tritt selten ein plötzlicher Spontanausfall der Maschine ohne jegliche Anzeichen auf, vielmehr treten symptomatische Erscheinungen auf, die auf den Fehler hindeuten und die messbar sind, weil z.B. Messgrößen im Zusammenhang mit der Maschine / Hardware sich allmählich verändern. Die geänderten Messgrößen können in der Regel sensorisch erfasst werden, etwa ein Ausgangsstrom, ein Eingangsstrom, eine Drehzahl (z.B. bei einem Gebläse), usw. Nicht selten kann die Maschine bzw. die Hardware weiter ihre Arbeit ausführen, mitunter zunächst sogar ohne oder ohne merklichen Qualitätsverlust bei der Produktion, bis die Maschine dann einen größeren Ausfall erleidet.

Insofern ermöglicht die Erfindung es auch, Wartungsintervalle zu optimieren, d.h. bei bestehenden Maschinenbeständen vorherzusagen, wann eine Wartung fällig wird und wie lang oder kurz die Wartungsintervalle gesetzt werden sollten.

Gemäß der Erfindung wurde die Schwierigkeit erkannt, dass die gemessenen Sensordaten von statistischen Fehler, insbesondere einem statistischen Rauschen überdeckt sind, wodurch erschwert wird, eine Auswertung einzelner gemessener Sensordaten durchzuführen, da diese statistischen Fehlern unterworfen sind und von vorgegebenen Sollwerten abweichen können, obgleich kein Fehler vorliegt.

Es wurde erkannt, dass zum Beispiel eine solche sensorisch erfasste Größe im Mittel sich nicht oder nur langsam verändert, die statistischen Schwankungen dieser Größe um einen Erwartungswert herum jedoch zunehmen.

Darüber hinaus wird gemäß der Erfindung erstmals berücksichtigt, dass auftretende Fehler sich oftmals in verschiedener Hinsicht auf die erfassten Sensordaten auswirken können. Erfindungsgemäß wird daher bei der Auswertung und Untersuchung auf statistische Unregelmäßigkeiten eingegangen, also zunächst unabhängig von deren Fehlerursache, weil einfache Vergleiche und Erfassung von Einzelwertabweichungen sich als unzureichendes Kriterium erwiesen haben, um eine sichere Fehlererkennung zu ermöglichen. Das erfindungsgemäße Verfahren kann daher universell für eine Vielzahl an Anwendungen verwendet werden, da keine speziellen Voraussetzungen hinsichtlich der überwachten Maschinen notwendig sind und in der Regel auch nur das generelle zu erwartende Verhalten einer sensorisch erfassten Messgröße bekannt sein muss, auch wenn es sich z.B. nur um einen über die Zeit konstanten Wert handelt.

Erfindungsgemäß werden mindestens drei Kriterien überprüft, bevor ein Warnsignal ausgegeben wird. Als Basiskriterium, welches als von grundlegender Bedeutung bei der Fehlererkennung erfindungsgemäß angenommen wird, wird überprüft, ob die Messdaten bis auf einen vorgegebenen Toleranzbereich konstant sind. Um die Verarbeitung weitgehend parallelisieren zu können, werden wenigstens drei Kriterien abgeprüft, gegebenenfalls sogar zeitlich gleichzeitig ermittelt und überprüft, bevor eine Warnung ausgegeben wird.

Da das Basiskriterium von zentraler Bedeutung ist und auch in Bezug auf andere Kriterien wie eine Trendanalyse oder eine Untersuchung auf sprunghafte Änderungen den allgemeineren Test darstellt, der die Grundbedingung für eine Trendabweichung oder sprunghafte Abweichung ist, wird in einem ersten Schritt auch zunächst das Basiskriterium überprüft. Erst dann, wenn dieses eine Abweichung ergibt, werden weitere Kriterien überprüft. Diese nachfolgenden Kriterien werden zur schnelleren Auswertung auch zeitlich parallel ausgewertet.

In vorteilhafter Weise stellt ein Ausführungsbeispiel der Erfindung somit auch ein mehrstufiges, wenigstens dreistufiges Warnsystem zur Verfügung, bei dem je nach Anzahl der erfüllten Kriterien bei der Fehlererkennung eine eigene Warnstufe angezeigt wird. Auf diese Weise wird zugleich ein Überwachungsverfahren bereitgestellt, das eine Gewichtung der auftretenden Fehler vornimmt, sodass der Bediener auf die Schwere der Unregelmäßigkeiten aufmerksam gemacht wird und auch gezielter abwägen kann, ob und mit welchen Maßnahmen in einen Prozess bzw. die Ausführung einer Maschine eingegriffen werden soll.

Werden in einem ersten Schritt zunächst das Basiskriterium und in einem weiteren Schritt sonstige Kriterien überprüft, so kann auch das Warnsystem in vorteilhafter Weise daran angepasst sein, also eine wenigsten zweistufige Warnung ausgeben, welche dieser Einteilung Rechnung trägt.

Die Erfindung ist vor allem für die Prozessautomatisierung von Systemen mit geeignet, die im Dauerbetrieb eingesetzt werden und deren Schwingungsverhalten bzw. Schwingungseigenschaften für den Betrieb besonders relevant sind. Als Beispiele seien die Überwachung von Vakuumpumpen für Reinraumanwendungen oder die Überwachung für Lüfter erwähnt, die im 24-Stunden-Betrieb 7 Tage die Woche betrieben werden. Aus der erfindungsgemäßen Analyse des Schwingungssignals kann vorteilhafterweise sehr frühzeitig ein Hinweis auf eine beginnende Schädigung gewonnen werden, sodass die Maschine bzw. Anlage rechtzeitig repariert bzw. gewartet werden kann, bevor ein größerer Schaden und Ausfall entsteht. Aus mehreren solcher Hinweise kann auch eine Anpassung der Wartungsintervalle vorgenommen werden, wenn nämlich abgeschätzt werden kann, wie häufig eine solche Schädigung im Betriebsablauf vorkommt und wann damit zu rechnen ist. Das System ist für Langzeitüberwachungen an verschiedene Anwendungen sehr schnell adaptierbar. Bei einer bevorzugten Weiterbildung werden als Sensoren Schwingungssensoren eingesetzt, um z.B. Lüfter, Lager, Pumpen, Vakuumpumpen oder sonstige Motoren im Dauerbetrieb zu überwachen.

Eine vorteilhafte Anwendung könnte zum Beispiel im Bereich der Medizintechnik vorliegen, bei der es zu einer Wechselwirkung technischer und biologischer Prozesse kommt, wodurch statistische Abweichungen begünstigt werden und eine Fehlererkennung, die ein Eingreifen bedingt, umso schwieriger von einer einfachen statistischen Abweichung zu unterscheiden ist. Eine andere vorteilhafte Anwendung besteht im Bereich der Kühlung von Produktionsprozessen (Ventilatoren, Lüfter usw).

Gemäß der Erfindung ist daher eine statistische Auswertung wenigstens einer aufgenommenen Serie oder eines Teils der wenigstens einen aufgenommenen Serie vorgesehen. Bei einem vorteilhaften Ausführungsbeispiel werden darüber hinaus wenigstens drei Kriterien dabei abgeprüft, um so auch je nachdem, wie viele dieser Kriterien auf einmal erfüllt sind, entsprechende Warnstufen zuordnen zu können.

Das erfindungsgemäße Überwachungsverfahren wird im Allgemeinen als computerimplementiertes Verfahren ausgeführt, bei dem eine elektronische bzw. rechnergestützte Auswertung der Sensordaten erfolgt. Es überwindet somit auch das technische Vorurteil, dass mit statistischen Fehler bzw. mit Rauschen behaftete Signale aus Fehler und Plausibilität statistisch nicht ausgewertet werden können.

Die statistische Auswertung gemäß der Erfindung erfolgt unter Aufstellung einer Nullhypothese. Wird von der Nullhypothese abgewichen oder liegt die Wahrscheinlichkeit, dass von der Nullhypothese abgewichen wird, oberhalb eines vorgegebenen Signifikanzlevels $\alpha$, so wird eine Warnung ausgegeben.

Bei besonders bevorzugten Weiterbildungen der Erfindung kann zum Beispiel wenigstens eines der folgenden drei Kriterien bei der statistischen Auswertung überprüft werden:

- Ein typischer, mit statistischen Methoden zu erkennender Fehler besteht darin, dass ein Sprung des mittleren Sensordatenniveaus in zeitlicher bzw. örtlicher Abfolge vorliegt. Dieser Sprung ist zu unterscheiden von Einzelabweichungen, die durch Rauschen und somit rein statistisch bedingt sind, ohne dass ein Fehler im eigentlichen Sinn vorliegt. Ein solcher Fehler in Form eines Sprunges kann zum Beispiel vorliegen, wenn die zu vermessende Größe tatsächlich einer plötzlich auftretenden, aber andauernden Änderung unterworfen ist, also von einem stationären Verhalten abweicht. Denkbar ist zum Beispiel aber auch ein sensorbedingter Fehler, der zu dieser Niveauabweichung führt. Der Mittelwert, zumindest über größere zeitliche oder örtliche Intervalle gemittelt, ändert sich also im zeitlichen Verlauf.

- Ein weiterer, mit statistischen Methoden zu erkennender Fehler kann darin bestehen, dass die gemessenen Sensordaten sich stetig gemäß einem gleichbleibenden Trend verändern ("weglaufen"). Auch in diesem Fall liegt also eine Abweichung vom stationären Verhalten vor. Der Mittelwert im zeitlichen Verlauf ändert sich kontinuierlich.

- Auch wenn der Mittelwert über größere zeitliche oder örtliche Intervalle gemittelt konstant bleibt, kann die Schwankungsanfälligkeit bzw. Volatilität bei einem Fehler aber sehr stark variieren bzw. insbesondere zunehmen.

Bei einer Ausführungsform der Erfindung kann das zu erwartende Verhalten durch eine Modellfunktion beschrieben werden, die sich aus einer Summe einer Funktion, die ein stationäres Verhalten beschreibt, einer Funktion, die zur Modellierung des Rauschens einen Random-Walk darstellt und einer linearen Funktion, die ein Trend-Verhalten mit der Zeit / dem örtlichen Abstand beschreibt, zusammensetzt, um typische Effekte wie ein Untergrundrauschen oder ein Driften der Messwerte abbilden zu können. Die Messwerte lassen sich daher wie folgt beschreiben:

$$y_t = c_t + \delta t + u_t,$$

wobei $y_t$ die modellierten Messdaten in Abhängigkeit von der Zeit $t$ (oder vom Ort) repräsentieren, $u_t$ ein stationäres Verhalten beschreibt, $c_t$ einen Random-Walk, um z.B. das Rauschen zu simulieren und $\delta t$ einen Trend, also ein "Weglaufen" oder "Driften" der Messwerte.

Durch diese Modellbeschreibung kann eine statistische Auswertung der zu erwartenden Fehler mathematisch in Bezug auf mögliche Fehler greifbar gemacht werden. Mit dieser Modellbeschreibung können statistische Größen wie der Erwartungswert, die Standardabweichung bzw. die Varianz berechnet werden. Bei einem stationären Verhalten kann der Erwartungswert durch Mittelwertbildung bestimmt werden. Aus dem Modell können auch die Abweichungen der gemessenen Werte von der Modellfunkton berechnet werden, die Residuen.

Da ein Trend-Verhalten der Messwerte, insbesondere ein kontinuierliches Driften der Messwerte einen Fehler darstellen würde, wird im Modell zunächst $\delta = 0$ angenommen. Beim ersten Kriterium handelt es sich um eine Überprüfung, ob ein Sprung im mittleren Messdatenniveau plötzlich auftritt, ein sog. Level-Shift. Bei einem stationären Verhalten ist idealerweise die Varianz = 0. Ist den Messwerten ein Rauschen unterlegt, liegt die Varianz um einen bestimmten Erwartungswert (hier idealerweise der Mittelwert) herum. Die Volatilität der Random-Walk-Komponente $c_t$ ist gem. einer Nullhypothese gleich Null und nur bei insgesamt nicht stationärem Verhalten (auch unter Berücksichtigung eines unterlegen Rauschens) von Null verschieden. Bei nicht stationärem Verhalten ändert sich im Grunde auch der Erwartungswert, sofern dieser über aufeinanderfolgende Zeitintervalle neu bestimmt wird. In diesem Fall hat statistisch gesehen ein Sprung stattgefunden, der die Messwerte so stark insgesamt verschiebt, dass ein Abweichen vom Erwartungswert bei einer bestimmten Varianz infolge eines unterlegten Rauschen nicht mehr durch das Rauschverhalten zu erklären ist.

Für die Nullhypothese kann ein stationärer KPSS-Test benutzt werden (KPSS: Kwiatkowski, Phillips, Schmidt und Shin):
Für eine Anzahl T an Messwerten kann so eine Teststatistik für die Nullhypothese

$$\frac{\sum_{t=1}^{T} S_t^2}{s^2 T^2}$$

angenommen werden, wobei $S_t$ die Summe der Residuen $e_t$

$$S_t = e_1 + e_2 + e_3 + \ldots + e_t$$

an einzelnen Messpunkten t (in der Regel zu einzelnen Zeitpunkten t) bezogen auf die Modellfunktion bzw. Regressionskurve sind und $s^2$ die Varianz in Bezug auf den Erwartungswert. Bei der Überprüfung des ersten Kriteriums, ob ein Level-Shift vorliegt, ist es in der Regel vorteilhaft, eine vergleichsweise geringe Menge an Messdaten zugrunde zu legen, um hieraus die Summe in der Testfunktion zu bilden, weil es beim Vergleichen entsprechend auch nicht erforderlich ist, dass der Punkt, an dem potentiell ein Sprung der Daten erfolgt, in dem zu überprüfenden Zeit- oder Ortsintervall liegt. Diese Teststatistik folgt einer gewissen Verteilung. Zum Testen der Nullhypothese kann nun überprüft werden, wie wahrscheinlich die angegebene Teststatistik ist. Unterhalb einer gewissen Wahrscheinlichkeit bzw. Signifikanz kann angenommen werden, dass die Nullhypothese nicht zutrifft. Der Signifikanzlevel $\alpha$, der nicht überschritten wer-

den sollte, kann z.B. bei 1% angenommen werden, sonst wird zu stark von der Teststatistik abgewichen und es ist eine Warnung abzugeben.

Ist die Volatilität der Modellfunktion = 0, so liegt ein stationäres Verhalten, dem allenfalls ein Rauschen unterlegt ist, vor.

Zur Überprüfung des zweiten Kriteriums, ob ein Trend-Verlauf vorliegt bzw. ob die die Messdaten kontinuierlich "wegdriften", ist es in der Regel notwendig, mehr Messpunkte auszuwerten und zu vergleichen. Ansonsten kann aber auch für dieses Kriterium der KPSS-Test angewandt werden. Als Bedingungen wird in der Modellfunkton immer noch vorausgesetzt, dass $\delta = 0$, da sonst ein Trend-Verhalten unterstellt werden muss, und es werden Autokorrelationen vernachlässigt.

Wenn nun die Signifikanz geringer als ein bestimmter, vorgegebener Wert ist und eine große Zahl an Messdaten verwendet wurde, kann ein Trend-Verhalten angenommen werden, das zweite Kriterium ist erfüllt.

Die Überprüfung des ersten und zweiten Kriteriums kann sich aber einzig durch die Zahl der Testdaten bzw. des gemessenen Zeitintervalls unterscheiden. Dabei wird entsprechend überprüft, ob:

- die Volatilität des Random-Walk-Terms sich von Null oder betragsgrößer als der Betrag eines vorgegebenen Werts ist und/oder
- die Teststatistik des stationären KPSS-Tests mit einer gewissen, vorgegebenen Wahrscheinlichkeit eingehalten wird oder nicht.

Zur Überprüfung des dritten Kriteriums, ob die Schwankungsbreite bzw. Schwankungsanfälligkeit stetig zunimmt, genügt es, die Varianzen in zwei unterschiedlichen Testphasen bzw. Messwertbereichen miteinander zu vergleichen. Die zu überprüfende Nullhypothese besteht darin, dass die Varianzen stets übereinstimmen oder zumindest nur mit einer vorgegebenen Wahrscheinlichkeit abweichen. Steigt die Schwankungsbreite, nimmt auch die Varianz in einem nachfolgenden Zeit- bzw. Messintervall zu. Die Menge an Testdaten kann geringer sein als bei der Überprüfung des zweiten Kriteriums zum Trend-Verlauf.

Statistisch gesehen kann somit wiederum die Signifikanz in Bezug auf einen festgelegten Wahrscheinlichkeitswert bestimmt werden, wobei, wenn die Signifikanz diesen Wahrscheinlichkeitswert unterschreitet, die Schwankungsbreite größer wird und das dritte Kriterium erfüllt ist.

Ausführungsbeispiele

Ausführungsbeispiele der Erfindung sind in den Zeichnungen dargestellt und werden nachstehend unter Angabe weiterer Einzelheiten und Vorteile näher erläutert. Im Einzelnen zeigen:

Fig. 1: eine schematische Darstellung eines Überwachungsverfahrens zur Fehlererkennung und Fehlervorhersage gem. der Erfindung,

Fig. 2-4: verschiedene Messdatenserien, die von einem Rauschen überlagert sind, zur Verdeutlichung der Fehlererkennung,

Fig. 5: eine Messdatenserie über einen größeren Zeitraum, die mit unterschiedlichen Fehlern behaftet ist, einschließlich einer Darstellung der Fehlerterme,

Fig. 6: eine schematische Darstellung eines Systems, das zur Maschinenüberwachung von mehreren Vakuumpumpen dient,

Fig. 7: eine schematische Darstellung der parallelen Auswertung dreier Kriterien vor Ausgabe des Warnsignals, sowie

Fig. 8: eine schematische Darstellung der gestuften Auswertung vor Ausgabe des Warnsignals.

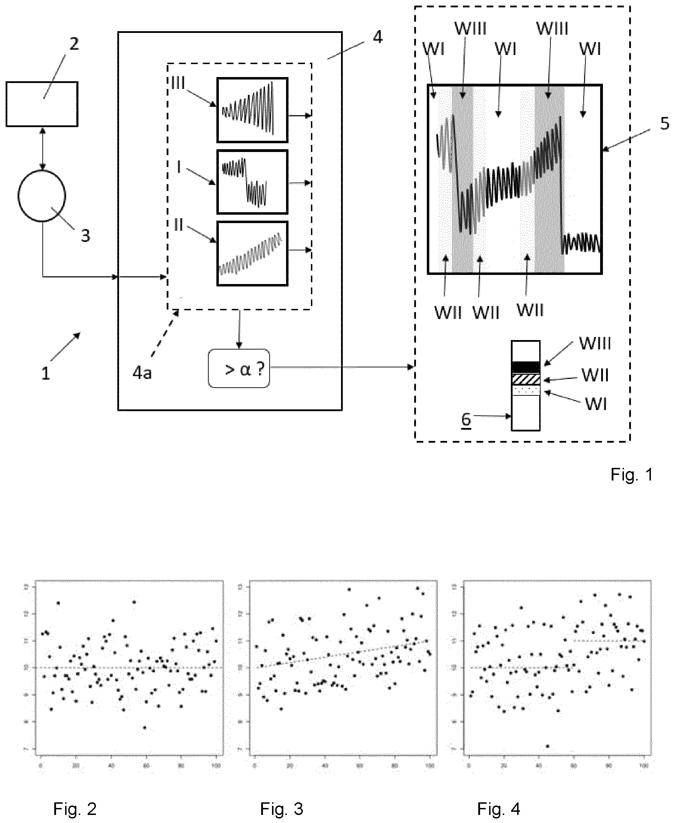

Figur 1 zeigt eine schematische Darstellung eines computerimplementierten Überwachungsverfahrens 1 zur Fehlererkennung und Fehlervorhersage gem. der Erfindung. Überwacht wird eine Anlage 2 mittels eines Sensors 3, der die gemessenen Daten an eine rechnergesteuerte Auswerteeinheit 4 sendet. Es kann sich bei dieser Auswerteeinheit 4 um eine Kontrolleinheit bzw. Steuerung, etwa innerhalb der Maschine handeln, sie kann separat auch auf einem Rechner ablaufen.

Die Auswerteeinheit 4 wertet die gemessenen Daten statistisch aus:
Sie gibt zunächst einen statistischen Signifikanzlevel vor, z.B. 1 % und ferner wenigstens ein Kriterium. Hier überprüft die Auswerteeinheit 4 das Basiskriterium sowie drei weitere Kriterien I, II und III, um herauszufinden:

- Liegt nach dem Basiskriterium überhaupt eine fehlerbedingende Abweichung vor, weil die Messdaten innerhalb einer vorgegebenen Toleranz nicht konstant sind?

- Erstes Kriterium I:
  Liegt ein Level-Shift im Verlauf der Messdaten vor?

- Zweites Kriterium II:
  Liegt ein Trend-Verlauf vor?

- Drittes Kriterium III:
  Liegt eine Änderung der Volatilität bzw. Schwankungsanfälligkeit vor?

Ob eines der Kriterien erfüllt ist, wird anhand einer sog. Nullhypothese bestimmt.

Es wird dazu eine Modellfunktion zugrunde gelegt, die statistische Fehler zum Beispiel über einen Random-Walk abbildet, aber auch einen Term besitzt der das im Grunde ungewollte Trend verhalten beschreiben kann.

Das Trendverhalten wird zunächst als nicht vorhanden angesehen, d.h. der Term, der den Trend beschreibt, wird gleich Null gesetzt.

Für eine Zunahme an Volatilität III genügt es, die Varianzen zweier (zeitlich aufeinander folgender) sensorisch erfasster Teilfolgen zu untersuchen. Deren Verhältnis wäre idealerweise = 1. Es können zum Verhalten auch Teststatistiken herangezogen und überprüft werden, ob das Messwertverhalten der Teststatistik hinreichend nahekommt.

Beim Level-Shift-Verhalten (Kriterium I) ändert sich der Erwartungswert. Auch hier kann mit einer Teststatistik gearbeitet werden. Hier werden nicht so viele Messdaten benötigt, weil der Level-Shift erwartungsgemäß eher schnell vonstattengeht und deshalb über einen längeren Zeitraum nicht gemittelt werden sollte, um die Signaländerung zuverlässig erfassen zu können.

Beim Trendverhalten, dass auch sehr langsam ablaufen kann, muss über einen längeren Zeitraum gemessen werden, um die Änderung festzustellen.

Die Auswertung der Signifikanz und die Bestimmung der Abweichung von der jeweiligen Nullhypothese kann im Ausführungsblock 4a durchgeführt werden.

Sind die Messdaten nicht konstant genug innerhalb einer Toleranzgrenze (Basiskriterium K) und ist eines der Kriterien I, II, III erfüllt, so wird von der Auswerteeinheit 4 eine erste Warnstufe WI ausgegeben. Analog wird bei zwei Kriterien eine zweite, kritischere Warnstufe WII und bei drei Kriterien eine besonders hohe Warnstufe WIII signalisiert. In Figur 1 ist der zeitliche Verlauf 5 der Messdaten angezeigt, wobei die Bereiche WI, WII, WIII, in denen jeweils ein bis drei Kriterien erfüllt sind, angezeigt werden. Denkbar ist auch, dass ein Maß für die Abweichung von der jeweiligen Nullhypothese bestimmt wird und dementsprechend die Warnstufen WI, WII, oder WIII gewählt werden.

Die Warnstufen WI, WII, WIII können entweder nur angezeigt werden, z.B. über ein Signalampel bzw. Signalsäule 6, es ist aber auch je nach Ausführungsform denkbar, dass die Auswerteeinheit 4 entsprechende Regelungsbefehle an die Anlage 2 sendet. Diese Befehle können auch daran angepasst sein, welche Fehlerquellen bei bestimmten Kriterien I, II, III typischerweise vorliegen.

Typischerweise muss davon ausgegangen werden, dass aufgenommene Messdaten einer Messdatenserie von einem Rauschen überlagert sind, wie es in den Figuren 2-4 jeweils der Fall ist. Aufgrund dieses überlagerten Rauschens sind die Messdaten in einzelnen Abschnitten der Messdatenserie so breit verteilt, dass eine Erkennung von Fehlern wie ein Trend-Verlauf oder ein Level-Shift erschwert wird. Gerade auch die Schwankungsanfälligkeit bzw. Volatilität ist rein grafisch schwieriger zu erkennen, wenn die durch das Rauschen bedingte Varianz der Messdaten vergleichsweise hoch ist und die Messwerte im Vergleich zu einem Mittelwert oder Erwartungswert zu höheren und niedrigeren Werten im Mittel gleich wahrscheinlich variieren können.

Fig. 2 zeigt ein Signal, das deutlich von einem Rauschen überlagert ist, aufgezeichnet als Messdatenserie. Im Mittel bleiben die Messdaten aber auf einem konstanten Niveau, welches als gepunktete Linie dargestellt ist. Trotz der hohen Varianz der Messwerte liegt in diesem Fall also eine gleichbleibende Volatilität vor; denn auch die Varianz wird nicht im zeitlichen Verlauf immer größer, sondern die Messdaten bleiben in diesem Abschnitt in im Wesentlichen gleichbleibender Streuung um den Mittel- / Erwartungswert. Über den Zeitraum gesehen liegen im Mittel also, abgesehen von statistischen Ausreißern der Messwerte, keine Signal-Schwankungen vor. Gemäß einer Auswertung nach dem dritten Kriterium III würde eine gleichbleibende Volatilität erkannt.

Fig. 3 zeigt auch ein von einem Rauschen überlagertes Signal. Im zeitlichen Verlauf jedoch steigen die Messwerte kontinuierlich an, es liegt ein Trend-Verlauf vor. Die gepunktete Linie, welche die Mittelwerte der Messdaten wiedergibt, ist eine Gerade mit positiver Steigung und zeigt das ansteigende Niveau an. Da aber auch hier die statistischen Schwankungen bzw. die Varianz der Daten hoch ist, ist dieser Trend ohne Auswertung eines Mittel- oder Erwartungswertes schwierig zu erkennen. Dieser Trend-Verlauf wird nach dem zweiten Kriterium II erkannt.

Fig. 4 zeigt eine analoge Situation bzgl. der Fig. 2-3, d.h. es liegt ein verrauschtes Signal vor, wobei unter Auswertung des Mittel- oder Erwartungswertes deutlich wird, dass im Verlauf ein plötzlicher Sprung der Messwerte (Level-Shift) auf ein höheres Niveau erfolgt. Der Mittel- oder Erwartungswert ist mit einer gepunkteten Linie dargestellt, die einen plötzlichen Sprung (Level-Shift) aufweist. Vor und nach diesem Sprungereignis sind die Messdaten im Mittel jeweils konstant in diesen zeitlichen Teilbereichen. Für diesen Fall ist entsprechend eine Auswertung nach dem ersten Kriterium I relevant.

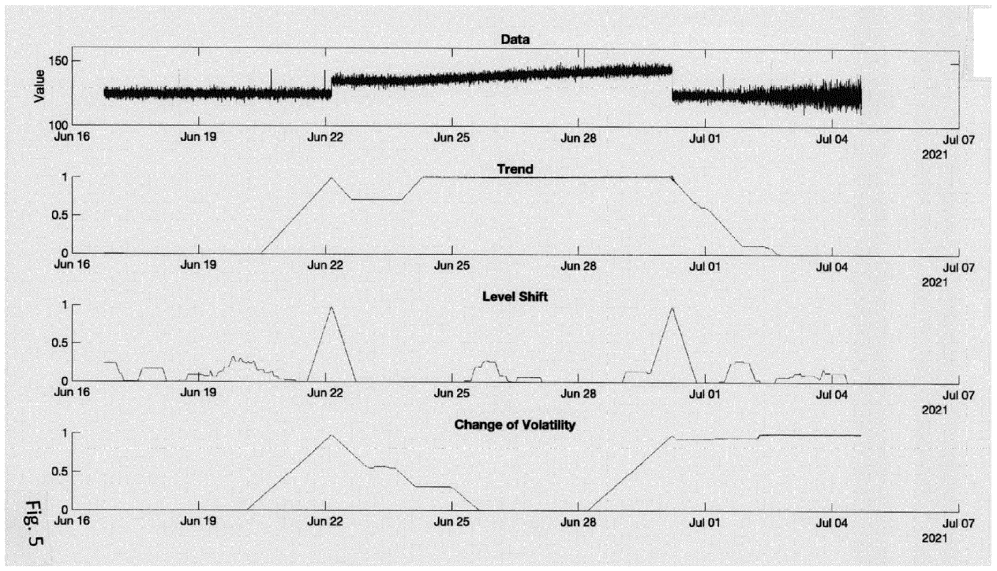

Ein Verlauf einer Messdatenserie über einen längeren Zeitraum von 19 Tagen ist in der ersten Zeile von Figur 5 ("Value") dargestellt. Die weiteren Zeilen beschreiben jeweils auf einer Skala von 0 bis 1 die Terme in der Modellfunktion, welche den Trend-Verlauf (Kriterium II), den Level-Shift (Kriterium I) und die Volatilität (Kriterium III) beschreiben.

Im Messdatenverlauf ("Value") ist zu erkennen, dass die Messwerte über den gesamten Zeitraum von einem statistischen Rauschen überlagert sind. Auch dieses Rauschen schwankt in seiner Intensität, d.h. die Varianz ist zum Beispiel im Bereich um den 4. Juli deutlich größer als noch im Bereich des 17. bis ca. 20. Juni. Im Mittel sind die Werte aber im Bereich vom 17. Juni bis ca. 20. Juni konstant und die Schwankungen in geringerem Rahmen statistisch bedingt, was sich dadurch in der letzten Zeile von Figur 5 zeigt, dass die Volatilität bis zum 20. Juni den Wert 0 einnimmt. Auch beim Trend-Verlauf in der zweiten Zeile liegt der Wert bis zum 20. Juni konstant bei 0, da sich das Signalniveau im Mittel nicht verändert.

Anders ist das Verhalten der Messdaten vom 30. Juni bis 5. Juli. Hier schaukeln sich die Abweichungen kontinuierlich auf, während das Signalniveau im Mittel konstant bleibt. Die Varianz wird größer. Das Sich-Aufschaukeln der Abweichungen erhöht den Wert der Volatilität ab dem 30. Juni. Das konstante Signalniveau im Mittel zeigt sich durch einen Trend-Wert im Bereich von 0 in diesem Zeitraum.

An zwei diskreten Stellen, nämlich zu einem Zeitpunkt um den 22.123. Juni und um den 30. Juni ändert sich sprunghaft der Signal-Level, was sich in der dritten Zeile durch jeweils einen isolierten Peak genau zu diesem Zeitpunkt bemerkbar macht. Auch Trend und Volatilität zeigen zu diesen Zeitpunkten jeweils Änderungen, auch als singuläre Spitzen im Signalverlauf, weil sich mit dem Sprung auch der Signal-Verlauf (Trend) geändert hat bzw. eine Abweichung erfolgt ist, die hier auch die Varianz übersteigt.

Zwischen dem 22./23. Juni und dem 30. Juni erhöht sich das Messsignal kontinuierlich und steigt leicht an. Daher ist in diesem Zeitraum in Zeile 2 der Figur 5 der Trend-Wert bei Werten im Bereich 1, weil ein ansteigender Trend-Verlauf vorliegt.

Die dritte Zeile von Fig. 5 zeigt den Term des Level-Shifts, bei dem, wie oben beschrieben, vor allem die Peaks im Bereich um den 22.123. Juni und um den 30. Juni auffallen. Außerhalb dieser beiden Peaks hält sich der Level-Term im Bereich gegen 0, zeigt aber unregelmäßige Abweichungen. Dies liegt daran, dass das Messsignal ("Value") im Mittel statistisch, je nachdem, welchen Bereich man betrachtet, nicht immer konstant ist, d.h. das Signalniveau, das ohnehin einem Rauschen unterlegen ist, ändert sich etwas.

Zudem können zwischendurch auftretende höhere statistische Schwankungen und/oder eine Änderungen des Levels, wie hier um den 22.123. Juni und um den 30. Juni dazu führen, dass auch im Bereich des Volatilitätsterms sich der Wert kurzzeitig ändert und ungleich 0 ist, weil das Signal eine Änderung in Form eines Sprungs erfährt,, der auch größer ist als die durch Rauschen bedingte Varianz, d.h. die Schwankungsanfälligkeit des Signals hat auch hier eine Änderung erfahren.

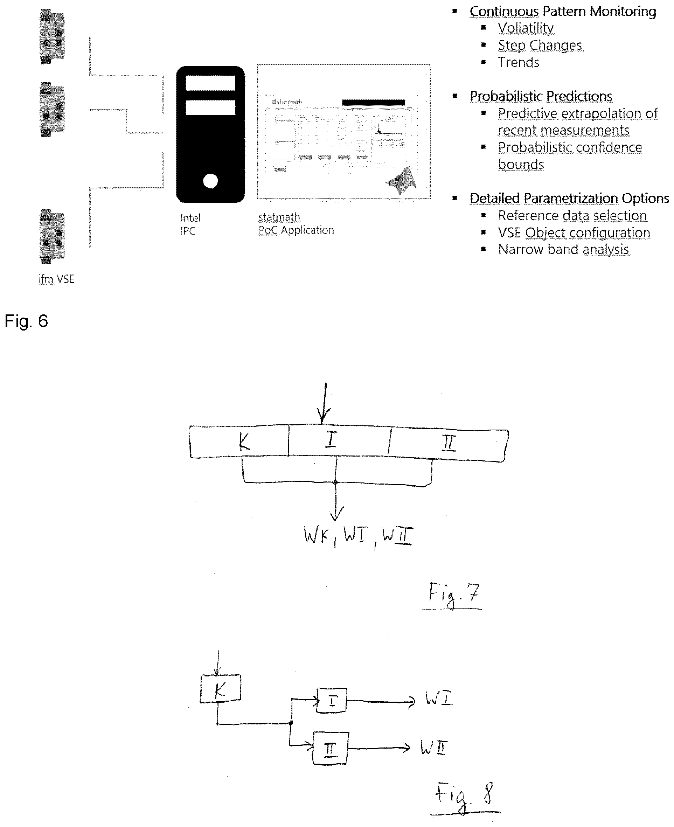

Figur 6 zeigt ein Schema eines Systems zur Überwachung von Vakuumpumpen mit Schwingungssensoren mit Diagnoseelektronik für die Prozessüberwachung. Hier handelt es sich um Schwingungssensoren vom Herstellertyp "ifm VSE". Die Signale werden an einen Prozessor zur Auswertung gesendet. Mehrere Takte des getakteten Prozesses werden zu einem Maschinenzyklus zusammengefasst. Kontinuierlich erfolgt, unterstützt von einer numerischen Auswertesoftware, eine Analyse der Messdaten (continuous pattern monitoring), um die Volatilität, stufenartige Änderungen (level shifts) oder Trend-Verläufe zu analysieren. Hierzu werden auch Mittel- oder Erwartungswerte berechnet. Mit Methoden der Wahrscheinlichkeitsrechnung wird zur Vorhersage der Datenentwicklung eine Extrapolation der letzten Messdaten durchgeführt, oder es wird geprüft, ob die Messdaten mit einer bestimmten Wahrscheinlichkeit in festgelegten Bereichen eines Konfidenzbands oder außerhalb des Konfidenzbandes liegen.

Selektiv kann eine Parametrisierung zugrunde gelegt werden, die eine nähere Analyse nach bestimmten Kriterien oder Parametern vorsieht (detailed parametrization options), z. B.:

- Auswahl von Referenzdaten aus der Datenmenge und/oder
- Konfiguration von Objekten bei der Schwingungsanalyse und/oder
- Analyse mit Hilfe enger Konfidenzbänder, um bereits geringer Abweichungen bzw. Stabilität von Messdaten herauszufinden.

Der Anwender hat in der Regel zwei Möglichkeiten, je nach Ausführungsvariante der Erfindung, den Pattern Monitor zu trainieren:

- Variante A: "Supervised": Der Nutzer markiert in historischen Daten händisch vorhandene Muster, beispielsweise einen Trend, der in einem spezifischen Zeitraum in den historischen Daten vorlag (oder analog zur Volatilität oder einem Sprung). Daraufhin parametriert sich der Algorithmus so, dass genau dieser Zeitraum erkannt worden wäre und alle anderen Zeiträume nicht, falls dies möglich ist mit den Testverfahren. Hierbei wird auch überprüft, ob der Nutzer Markierungen vergessen hat oder einen Bereich markiert hat, der gar kein Muster ausweist.

- Variante B: "Unsupervised": Der Nutzer lädt einen Zeitraum ein, der stationär ist und keines der Muster enthält. Dann wird der Algorithmus so trainiert, dass er im ausgewählten Zeitraum keinen Alarm / kein Warnsignal ausgegeben hätte, dabei aber so sensitiv wie möglich parametriert ist (z.B. enges Konfidenzband), also bei kleinsten Veränderungen / Mustern ausschlagen würde. Hierbei wird auch überprüft, ob es doch ganz sicher Muster in den Daten gibt, die der Benutzer nur vergessen hat zu markieren.

Die Figuren 7 und 8 zeigen zwei Varianten der Ermittlung der Kriterien. Nach Fig. 7 werden drei Kriterien, darunter das Basiskriterium K sowie die Analyse eines Trends II und das Auftreten von Sprüngen I parallel ermittelt. Je nachdem, welches Kriterium relevant ist, wird einer der Warnhinweise (oder gegebenenfalls auch mehrere Warnhinweise) WK, WI, WII ausgegeben.

Fig.8 zeigt eine gestufte Ermittlung von Kriterien: Zunächst wird das Basiskriterium K geprüft, dann folgen, wenn hierbei ein Abweichen festgestellt wurde, die beiden anderen Kriterien I, II parallel zueinander. Hier genügt als Ausgabe ein zweistufiges Warnsignal WI, WII, je nachdem ob die nicht konstanten Messdaten Sprünge oder Verlaufstrends zeigen.

In vorteilhafter Weise ermöglicht das erfindungsgemäße Überwachungsverfahren, eine statistische Auswertung von Messdaten vorzunehmen, die teilweise unter anderem auch statistischen Fehlern unterworfen sind, etwa von einem Rauschen überlagert werden, und etwaige Fehler auf diese Weise zu erkennen. Das Verfahren gemäß der Erfindung bedient sich vornehmlich statistischer Methoden und ist weitgehend universell, unabhängig vom zu überwachenden Maschinentyp / Hardwaretyp, weil im Grunde das Auftreten von statistischen Fehlern von Fehlern, die durch echte Fehlfunktionen bedingt sind, unterschieden wird. Erfindungsgemäß geschieht dies unter Bestimmung von Abweichungen von einer Nullhypothese und der Auswertung einer statistischen Signifikanz gegenüber einem zu vorbestimmten Signifikanzlevel. Die Einstufung in verschiedene Kategorien anhand der Anzahl an erfüllten Fehlerkriterien und/oder anhand des Grades der Abweichung ermöglicht bei einer Weiterbildung die Einstufung der Ernsthaftigkeit der Situation.

Bezugszeichenliste

| | |
|---|---|
| 1 | Überwachungsverfahren |
| 2 | zu überwachende Anlage |
| 3 | Sensor |
| 4 | Auswerteeinheit |
| 4a | Signifikanz-Berechnung bezüglich Nullhypothese |
| 5 | Messdaten mit Fehlerkategorisierung |
| 6 | Signalsäule |
| I | Kriterium (Volatilität) |
| II | Kriterium (Level-Shift) |
| III | Kriterium (Trend-Verhalten) |
| WI | erste Warnstufe |
| WII | zweite Warnstufe |
| WIII | dritte Warnstufe |
| WK | Basiswarnstufe |
| $\alpha$ | Signifikanzlevel |
| K | Basiskriterium |

**Patentansprüche**

1.  Computerimplementiertes Überwachungsverfahren (1) für die Schwingungsanalyse zur Fehlererkennung eines Maschinenfehlers und/oder Hardwarefehlers bei der Prozessautomatisierung in einem maschinell betriebenen und/oder unterstützten Produktionsprozess, umfassend:

    • Erfassung wenigstens einer Serie in dem Prozess gemessener Sensordaten (5) in einer zeitlichen und/oder örtlichen Abfolge,
    • wobei eine statistische Auswertung (4) der wenigstens einen Serie oder wenigstens eines Teils der wenigstens einen Serie vorgenommen wird, um jeweils eine Abweichung der gemessenen Sensordaten (5) nach wenigstens drei Kriterien (K, I, II, III) zu ermitteln,
wobei die statistische Auswertung:
• eine Nullhypothese bereitstellt,
• einen Erwartungswert für die gemessenen Sensordaten bereitstellt,
• die Berechnung der statistischen Signifikanz hinsichtlich der Abweichung von der vorgegebenen Nullhypothese vorsieht und
• eine Warnung ausgibt, wenn die statistische Signifikanz von der Nullhypothese abweicht und/oder wenn bei einem vorgegebenen Signifikanzlevel $\alpha$ die Wahrscheinlichkeit eines Abweichens von der Nullhypothese größer als der Signifikanzlevel $\alpha$ ist,

**dadurch gekennzeichnet, dass**
• bei der statistischen Auswertung (4) die Abweichungen der gemessenen Sensordaten nach den folgenden Kriterien (K, I, II; III) ermittelt werden, bevor die Warnung ausgegeben wird, wobei:

  i. bei der statistischen Auswertung (4) zum Testen eines Basiskriteriums (K) überprüft wird, ob das mittlere Sensordatenniveau in zeitlicher und/oder örtlicher Abfolge innerhalb eines durch das Basiskriterium (K) vorgegebenen Toleranz konstant bleibt und
  ii. bei der statistischen Auswertung (4) zum Testen eines zweiten der Kriterien (II) überprüft wird, ob ein Trend einer kontinuierlichen Veränderung des mittleren Sensordatenniveaus in zeitlicher und/oder örtlicher Abfolge vorliegt und / oder
  iii. bei der statistischen Auswertung (4) zum Testen eines ersten der Kriterien (I) überprüft wird, ob ein Sprung des mittleren Sensordatenniveaus in zeitlicher und/oder örtlicher Abfolge vorliegt, wobei der Sprung stattgefunden hat, wenn der Sprung die Messwerte so stark insgesamt verschiebt, dass das Abweichen vom Erwartungswert bei einer bestimmten Varianz infolge eines unterlegten Rauschens nicht mehr durch das Rauschverhalten zu erklären ist, und/oder
  iv. bei der statistischen Auswertung zum Testen eines dritten der Kriterien (III) überprüft wird, ob sich die Schwankungsanfälligkeit in der Serie in zeitlicher und/oder örtlicher Abfolge ändert, wobei
  v. bei der statistischen Auswertung (4) stets das Basiskriterium (K) überprüft wird, wobei bei der statistischen Auswertung (4) die Abweichungen der gemessenen Sensordaten nach dem Basiskriterium (K) zuerst vorgenommen wird, und dann gleichzeitig oder zeitlich überlappend nach zwei der weiteren Kriterien (I, II, III) überlappend ermittelt wird.

**2.** Computerimplementiertes Überwachungsverfahren (1) für die Schwingungsanalyse nach Anspruch 1, **dadurch gekennzeichnet, dass** die statische Auswertung die Ausgabe einer wenigstens drei-, insbesondere vierstufigen Warnung (WK, WI, WII, WIII) vorsieht, wobei jeder Anzahl an erfüllten Kriterien von den Kriterien (K, I, II, III) jeweils eine Warnstufe (WK, WI, WII, WIII) zugeordnet wird.

**3.** Computerimplementiertes Überwachungsverfahren (1) für die Schwingungsanalyse nach Anspruch 1, **dadurch gekennzeichnet, dass** die statische Auswertung die Ausgabe einer wenigstens zweistufigen Warnung vorsieht, je nachdem, ob neben dem Basiskriterium noch das erste oder zweite Kriterium eine Abweichung aufdeckt.

**4.** Computerimplementiertes Überwachungsverfahren (1) für die Schwingungsanalyse nach einem der vorgenannten Ansprüche, **dadurch gekennzeichnet, dass** als Modellfunktion für das Verhalten der Sensordaten (5) in der Serie folgende Funktion verwendet wird:

$$y_t = c_t + \delta t + u_{t,}$$

wobei $y_t$ die modellierten Sensordaten in Abhängigkeit von t, $c_t$ einen Random-Walk beschreibt, $\delta$ einen Trend und $\delta t$ ein lineares Trendverhalten sowie $u_t$ ein stationäres Verhalten, wenn die Sensordaten der Serie über t aufgetragen werden, wobei t den zeitlichen und/oder örtlichen Verlauf beschreibt.

**5.** Computerimplementiertes Überwachungsverfahren (1) für die Schwingungsanalyse nach einem der vorgenannten Ansprüche, **dadurch gekennzeichnet, dass** zur Überprüfung des ersten Kriteriums (I) die Nullhypothese verwendet wird, dass die Varianz als mittlere quadratische Abweichung vom Erwartungswert und Volatilität der Random-Walk-Terms $c_t$ null ist, wobei insbesondere hinsichtlich der Modellfunktion angenommen wird, dass der Trend $\delta = 0$.

**6.** Computerimplementiertes Überwachungsverfahren (1) für die Schwingungsanalyse nach einem der vorgenannten Ansprüche, **dadurch gekennzeichnet, dass** zur Überprüfung des ersten und/oder zweiten Kriteriums (I) ein stationärer KPSS-Test durchgeführt wird, wobei als Nullhypothese überprüft wird, ob eine Teststatistik mit einer vorgegebenen Wahrscheinlichkeit erfüllt wird, wobei als Teststatistik insbesondere verwendet wird:

$$\frac{\sum_{t=1}^{T} S_t^2}{s^2 T^2}$$

als Summe der Quadrate der Summe $S_t$ über den Teil T der Abfolge, wobei $S_t$ wiederum die Summe der Residuen in Bezug auf die Regressionskurve der gemessenen Sensordaten an einzelnen Stellen t ist, im Verhältnis zum Produkt aus Varianz $s^2$ multipliziert mit dem Quadrat der Anzahl des Abfolgeteils T, wobei eine Warnung ausgegeben wird, wenn mit weniger als einer vorgegebenen Wahrscheinlichkeit die Teststatistik nicht erfüllt wird.

**7.** Computerimplementiertes Überwachungsverfahren (1) für die Schwingungsanalyse nach einem der vorgenannten Ansprüche, **dadurch gekennzeichnet, dass** zur Überprüfung des ersten und/oder des zweiten Kriteriums und/oder des Basiskriteriums (I, II, K) Autokorrelationen, welche insbesondere bei Signalverzögerungen in Form von durch Verzögerung beeinflussten Sensordaten berücksichtigt und/oder herausgerechnet und/oder vernachlässigt werden.

**8.** Computerimplementiertes Überwachungsverfahren (1) für die Schwingungsanalyse nach einem der vorgenannten Ansprüche, **dadurch gekennzeichnet, dass** zur Überprüfung des zweiten Kriteriums (II) ein größerer Teil der Abfolge mit mehr Sensordaten verwendet wird als zur Überprüfung des ersten Kriteriums (I).

**9.** Computerimplementiertes Überwachungsverfahren (1) für die Schwingungsanalyse nach einem der vorgenannten Ansprüche, **dadurch gekennzeichnet, dass** zur Überprüfung des dritten Kriteriums (III) wenigstens zwei Teilfolgen von Sensordaten aufgenommen werden.

**10.** Computerimplementiertes Überwachungsverfahren (1) für die Schwingungsanalyse nach einem der vorgenannten Ansprüche, **dadurch gekennzeichnet, dass** zur Überprüfung des dritten Kriteriums (III) als Nullhypothese eine Teststatistik F verwendet wird, welche das Verhältnis der Varianzen der beiden Testfolgen bildet, und als Nullhypothese angenommen wird, dass $F = 1$.

**11.** Computerimplementiertes Überwachungsverfahren (1) für die Schwingungsanalyse nach einem der vorgenannten Ansprüche, **dadurch gekennzeichnet, dass** die Warnungen an eine Signalsäule übermittelt werden, wobei:

• jeder Warnstufe in Abhängigkeit von der Zahl der Warnungen ein anderes Leuchtzeichen an der Signalsäule zugeordnet wird und/oder je nach Abweichung von der Nullhypothese ein anderes Leuchtzeichen an der Signalsäule zugeordnet wird.

12. Computerimplementiertes Überwachungsverfahren (1) für die Schwingungsanalyse nach einem der vorgenannten Ansprüche, **dadurch gekennzeichnet, dass** bei der Erfassung die Daten eines Zeitraums geladen werden, der stationär ist und insbesondere keines der Muster enthält, wobei anschließend der Algorithmus so trainiert wird, dass er im ausgewählten Zeitraum keinen Alarm und/oder kein Warnsignal ausgegeben hätte, dabei aber so sensitiv wie möglich parametriert ist, z.B. durch ein enges Konfidenzband, also bei entsprechend kleinen Veränderungen und/oder Mustern ausschlagen würde.

**Claims**

1. Computer-implemented monitoring method (1) for vibration analysis for fault detection of a machine fault and/or hardware fault in process automation in a production process operated and/or assisted by machine, comprising:

   • acquiring at least one series of sensor data (5) measured in the process in a chronological and/or locational sequence,
   • wherein a statistical evaluation (4) of the at least one series or at least a part of the at least one series is performed in order to determine in each case a deviation of the measured sensor data (5) according to at least three criteria (K, I, II, III),

   wherein the statistical evaluation:

   • provides a null hypothesis,
   • provides an expected value for the measured sensor data,
   • provides the calculation of the statistical significance with respect to the deviation from the predetermined null hypothesis, and
   • outputs a warning if the statistical significance deviates from the null hypothesis and/or if at a predetermined significance level $\alpha$ the probability of a deviation from the null hypothesis is greater than the significance level $\alpha$,

   **characterized in that**

   • in the statistical evaluation (4), the deviations of the measured sensor data are determined according to the following criteria (K, I, II; III) before the warning is output, wherein:

   i. in the statistical evaluation (4) for testing a basic criterion (K) it is checked whether the mean sensor data level in chronological and/or locational sequence remains constant within a tolerance predetermined by the basic criterion (K) and
   ii. in the statistical evaluation (4) to test the second of the criteria (II) it is checked whether a trend of a continuous change of the mean sensor data level is present in chronological and/or locational sequence, and/or
   iii. in the statistical evaluation (4) to test a first of the criteria (I), it is checked whether a jump of the mean sensor data level is present in chronological and/or locational sequence, wherein the jump has taken place when the jump shifts the measured values so strongly as a whole that deviations from the expected value with a specific variance as a result of underlying noise is no longer to be explained by the noise behaviour and/or
   iv. in the statistical evaluation to test a third of the criteria (III), it is checked whether the susceptibility to variation in the series changes in chronological and/or locational sequence, wherein
   v. in the statistical evaluation (4), the basic criterion (K) is always checked, wherein the statistical evaluation (4) of the deviations of the measured sensor data according to the basic criterion (K) is performed first, and then simultaneously or chronologically, a determination is made overlapping according to two of the further criteria (I, II, III) overlapping.

2. Computer-implemented monitoring method (1) for vibration analysis according to Claim 1, **characterized in that** the statistical evaluation provides the output of an at least three-level, in particular four-level warning (WK, WI, WII, WIII), wherein each number of criteria met of the criteria (K, I, II, III) is assigned a warning level (WK, WI, WII, WIII) in each case.

3. Computer-implemented monitoring method (1) for vibration analysis according to Claim 1, **characterized in that** the statistical evaluation provides the output of an at least two-level warning, depending on whether, in addition to the basic criterion, the first or second criterion also reveals a deviation.

4. Computer-implemented monitoring method for vibration analysis (1) according to any one of the preceding claims, **characterized in that** the following function is used as the model function for the behaviour of the sensor data (5) in the series:

$$y_t = c_t + \delta t + u_{t,}$$

wherein $y_t$ represents the modelled measured data as a function of $t$, $c_t$ describes a random walk, $\delta$ describes a trend and $\delta t$ describes a linear trend behaviour, and $u_t$ describes a stationary behaviour, when the sensor data of the series are plotted over t, wherein t describes the chronological and/or locational course.

5. Computer-implemented monitoring method for vibration analysis (1) according to any one of the preceding claims, **characterized in that**, to check the first criterion (I), the null hypothesis is used that the variance as the mean square deviation of the expected value and volatility of the random walk term $c_t$ is zero, wherein it is assumed in particular with respect to the model function that the trend $\delta = 0$.

6. Computer-implemented monitoring method for vibration analysis (1) according to any one of the preceding claims, **characterized in that**, to check the first and/or second criterion (I), a stationary KPSS test is carried out, wherein it is checked as the null hypothesis whether a test statistic is met with a predetermined probability, wherein in particular the following is used as the test statistic:

$$\frac{\sum_{t=1}^{T} S_t^2}{s^2 T^2}$$

as the sum of the squares of the sum $S_t$ over the part $T$ of the sequence, wherein $S_t$ is in turn the sum of the residues in relation to the regression curve of the measured sensor data at individual points t, in relation to the product of variance $s^2$ multiplied by the square of the number of the sequence part T, wherein a warning is output if the test statistic is not met with less than a predetermined probability.

7. Computer-implemented monitoring method for vibration analysis (1) according to any one of the preceding claims, **characterized in that**, to check the first and/or the second criterion and/or the basic criterion (I, II, K), autocorrelations are used, which are taken into consideration and/or calculated out and/or neglected in particular in signal delays in the form of sensor data influenced by delay.

8. Computer-implemented monitoring method for vibration analysis (1) according to any one of the preceding claims, **characterized in that**, to check the second criterion (II), a larger part of the sequence having more sensor data is used than to check the first criterion (I).

9. Computer-implemented monitoring method for vibration analysis (1) according to any one of the preceding claims, **characterized in that**, to check the third criterion (III), at least two partial sequences of sensor data are recorded.

10. Computer-implemented monitoring method for vibration analysis (1) according to any one of the preceding claims, **characterized in that**, to check the third criterion (III), a test statistic F is used as the null hypothesis, which forms the ratio of the variances of the two test sequences, and it is assumed as the null hypothesis that F =1.

11. Computer-implemented monitoring method for vibration analysis (1) according to any one of the preceding claims, **characterized in that** the warnings are transmitted at a signal column, wherein:

    • each warning level is assigned a different light sign on the signal column as a function of the number of the warnings and/or
    • a different light sign on the signal column is assigned depending on the deviation from the null hypothesis.

12. Computer-implemented monitoring method for vibration analysis (1) according to any one of the preceding claims, **characterized in that**, upon the acquisition, the data of a period of time are loaded which is stationary and in particular does not contain any of the patterns, wherein subsequently the algorithm is trained so that it would not have output an alarm and/or warning signal in the selected period of time, but at the same time is parameterized as sensitively as possible, for example, by a narrow confidence band, thus would deflect in the event of correspondingly small changes and/or patterns.

**Revendications**

1. Procédé de surveillance mis en œuvre par ordinateur (1) destiné à l'analyse de vibrations pour la reconnaissance de défauts d'un défaut de machine et/ou d'un défaut matériel lors de l'automatisation de processus dans un processus de production fonctionnant et/ou assisté par machine, comprenant les étapes consistant à :

    • détecter au moins une série dans le processus de données de capteur mesurées (5) dans une séquence temporelle et/ou locale,
    • dans lequel une évaluation statistique (4) de ladite au moins une série ou du moins d'une partie de ladite au moins une série est effectuée pour établir respectivement un écart des données de capteur mesurées (5) selon au moins trois critères (K, I, II, III),

dans lequel l'évaluation statistique :

- fournit une hypothèse nulle,
- fournit une valeur attendue pour les données de capteur mesurées,
- prévoit le calcul de la signification statistique concernant l'écart par rapport à l'hypothèse nulle prédéfinie, et
- émet un avertissement si la signification statistique s'écarte de l'hypothèse nulle et/ou si pour un niveau de signification prédéfini $\alpha$ la probabilité d'un écart par rapport à l'hypothèse nulle est supérieure au niveau de signification $\alpha$,

**caractérisé en ce que**

- lors de l'évaluation statistique (4), les écarts des données de capteur mesurées sont établis selon les critères suivants (K, I, II ; III) avant l'émission de l'avertissement, dans lequel :

  i. lors de l'évaluation statistique (4) pour tester un critère de base (K), il est vérifié si le niveau de données de capteur moyen reste constant dans la séquence temporelle et/ou locale à l'intérieur d'une tolérance prédéfinie par le critère de base (K), et

  ii. lors de l'évaluation statistique (4) pour tester un deuxième des critères (II), il est vérifié si une tendance d'une variation continue du niveau de données de capteur moyen existe dans la séquence temporelle et/ou locale, et/ou

  iii. lors de l'évaluation statistique (4) pour tester un premier des critères (I), il est vérifié s'il existe un saut du niveau de données de capteur moyen dans la séquence temporelle et/ou locale, dans lequel le saut a eu lieu si le saut décale les valeurs mesurées globalement à tel point que l'écart par rapport à la valeur attendue pour une variance déterminée suite à un bruit sous-jacent ne peut plus s'expliquer par le comportement de bruit, et/ou

  iv. lors de l'évaluation statistique pour tester un troisième des critères (III), il est vérifié si la tendance à la fluctuation dans la série varie dans la séquence temporelle et/ou locale, dans lequel

  v. le critère de base (K) est toujours vérifié lors de l'évaluation statistique (4), dans lequel l'évaluation statistique (4) des écarts des données de capteur mesurées est d'abord effectuée selon le critère de base (K) et est ensuite établie en recouvrement en même temps ou avec un recouvrement temporel selon deux des autres critères (I, II, III).

2. Procédé de surveillance mis en œuvre par ordinateur (1) destiné à l'analyse de vibrations selon la revendication 1, **caractérisé en ce que** l'évaluation statistique prévoit l'émission d'un avertissement (WK, WI, WII, WIII) à au moins trois, en particulier quatre niveaux, dans lequel respectivement un niveau d'avertissement (WK, WI, WII, WIII) est associé à chaque nombre de critères satisfaits parmi les critères (K, I, II, III).

3. Procédé de surveillance mis en œuvre par ordinateur (1) destiné à l'analyse de vibrations selon la revendication 1, **caractérisé en ce que** l'analyse statistique prévoit l'émission d'un avertissement à au moins deux niveaux, en fonction du fait que le premier ou le deuxième critère révèle aussi un écart en plus du critère de base.

4. Procédé de surveillance mis en œuvre par ordinateur (1) destiné à l'analyse de vibrations selon l'une quelconque des revendications précédentes, **caractérisé en ce que** comme fonction modèle pour le comportement des données de capteur (5) dans la série, la fonction suivante est utilisée :

$$y_t = c_t + \delta t + u_t,$$

où $y_t$ décrit les données de capteur modélisées en fonction de t, $c_t$ décrit une marche aléatoire, $\delta$ décrit une tendance et 5t décrit un comportement de tendance linéaire, et $u_t$ décrit un comportement stationnaire lorsque les données de capteur de la série sont appliquées par rapport à t, où t décrit la courbe temporelle et/ou locale.

5. Procédé de surveillance mis en œuvre par ordinateur (1) destiné à l'analyse de vibrations selon l'une quelconque des revendications précédentes, **caractérisé en ce que** l'hypothèse nulle est utilisée pour la vérification du premier critère (I), **en ce que** la variance en tant qu'écart quadratique moyen par rapport à la valeur attendue et à la volatilité des termes de marche aléatoire $c_t$ est nulle, dans lequel il est supposé en particulier concernant la fonction modèle que la tendance $\delta = 0$.

6. Procédé de surveillance mis en œuvre par ordinateur (1) destiné à l'analyse de vibrations selon l'une quelconque des revendications précédentes, **caractérisé en ce que** pour la vérification du premier et/ou du deuxième critère (I), un test KPSS stationnaire est effectué, dans lequel comme hypothèse nulle, il est vérifié si une statistique de test est satisfaite avec une probabilité prédéfinie, dans lequel on utilise comme statistique de test en particulier

$$\frac{\sum_{t=1}^{T} S_t^2}{s^2 T^2}$$

en tant que somme des carrés de la somme $S_t$ concernant la partie T de la séquence, dans lequel $S_t$ est à son tour la somme des résidus en se référant à la courbe de régression des données de capteur mesurées à des endroits t individuels, par rapport au produit de la variance $s^2$ multipliée par le carré du nombre de la partie de séquence T, dans lequel un avertissement est émis si la statistique de test n'est pas satisfaite avec moins d'une probabilité prédéfinie.

7. Procédé de surveillance mis en œuvre par ordinateur (1) destiné à l'analyse de vibrations selon l'une quelconque des revendications précédentes, **caractérisé en ce que** pour la vérification du premier et/ou du deuxième critère et/ou du critère de base (I, II, K), des auto-corrélations sont utilisées qui sont prises en compte et/ou calculées et/ou ignorées en particulier en cas de retards de signal sous la forme de données de capteur influencées par un retard.

8. Procédé de surveillance mis en œuvre par ordinateur (1) destiné à l'analyse de vibrations selon l'une quelconque des revendications précédentes, **caractérisé en ce que** pour la vérification du deuxième critère (II), une plus grande partie de la séquence avec plus de données de capteur est utilisée que pour la vérification du premier critère (I).

9. Procédé de surveillance mis en œuvre par ordinateur (1) destiné à l'analyse de vibrations selon l'une quelconque des revendications précédentes, **caractérisé en ce que** pour la vérification du troisième critère (III), au moins deux séquences partielles de données de capteur sont enregistrées.

10. Procédé de surveillance mis en œuvre par ordinateur (1) destiné à l'analyse de vibrations selon l'une quelconque des revendications précédentes, **caractérisé en ce que** pour la vérification du troisième critère (III), comme hypothèse nulle, une statistique de test F est utilisée qui constitue le rapport entre les variances des deux séquences de test, et comme hypothèse nulle il est supposé que F = 1.

11. Procédé de surveillance mis en œuvre par ordinateur (1) destiné à l'analyse de vibrations selon l'une quelconque des revendications précédentes, **caractérisé en ce que** les avertissements sont transmis à une colonne de signalisation, dans lequel :

    • en fonction du nombre des avertissements, un autre symbole lumineux sur la colonne de signalisation est associé à chaque niveau d'avertissement, et/ou

    en fonction de l'écart par rapport à l'hypothèse nulle, un autre symbole lumineux sur la colonne de signalisation est associé.

12. Procédé de surveillance mis en œuvre par ordinateur (1) destiné à l'analyse de vibrations selon l'une quelconque des revendications précédentes, **caractérisé en ce que** lors de la détection, les données d'une période de temps sont chargées qui est stationnaire et ne contient en particulier aucun des modèles, dans lequel ensuite l'algorithme est entraîné de telle sorte que dans la période de temps sélectionnée, il n'aurait émis aucune alarme et/ou aucun signal d'avertissement tout en étant paramétré avec un maximum de sensibilité, par exemple par une bande de confiance étroite, c'est-à-dire qu'il réagirait en cas de variations et/ou de modèles faibles.

Fig. 1

Fig. 2

Fig. 3

Fig. 4

Fig. 5

- Continuous Pattern Monitoring
  - Voliatility
  - Step Changes
  - Trends

- Probabilistic Predictions
  - Predictive extrapolation of recent measurements
  - Probabilistic confidence bounds

- Detailed Parametrization Options
  - Reference data selection
  - VSE Object configuration
  - Narrow band analysis

Intel
IPC

statmath
PoC Application

ifm VSE

Fig. 6

$WK, WI, WII$

Fig. 7

Fig. 8

**IN DER BESCHREIBUNG AUFGEFÜHRTE DOKUMENTE**

**In der Beschreibung aufgeführte Patentdokumente**

- DE 102018222562 A1
- EP 0934567 A1
- DE 102019107363 A1
- EP 0907913 B1

**In der Beschreibung aufgeführte Nicht-Patentliteratur**

- Fractional Dynamics of PMU Data. **L. SHALALFEH et al.** IEEE Transactions on Smart Grid. IEEE, May 2021, vol. 12, 1-11